Europäisches Patentamt

**European Patent Office**

**Office européen des brevets**

(11) Publication number: **0 012 267**
**B1**

(12) **EUROPEAN PATENT SPECIFICATION**

(45) Date of publication of patent specification: **28.07.82**

(51) Int. Cl.³: **F 16 T 1/10**

(21) Application number: **79104729.3**

(22) Date of filing: **28.11.79**

(54) Thermostatic steam trap and insert assembly usable in a body member to form a thermostatic steam trap.

(30) Priority: **06.12.78 US 966949**

(43) Date of publication of application:
**25.06.80 Bulletin 80/13**

(45) Publication of the grant of the patent:
**28.07.82 Bulletin 82/30**

(84) Designated Contracting States:
**BE CH DE FR GB IT NL SE**

(56) References cited:
**DE - B - 1 300 392**
**FR - A - 2 188 788**
**FR - A - 2 330 953**
**US - A - 1 656 373**
**US - A - 3 679 131**
**US - A - 4 013 220**
**US - A - 4 037 784**

(73) Proprietor: **Yarway Corporation**
**Norristown and Narcissa Roads**
**Blue Bell Pennsylvania (US)**

(72) Inventor: **Hetz, Heinz K.**
**Ash Road**
**Holicong Pennsylvania (US)**

(74) Representative: **Berkenfeld, Helmut**
**An der Schanz 2**
**D-5000 Köln 60 (DE)**

Courier Press, Leamington Spa, England.

Thermostatic steam trap and insert assembly usable in a body member to form a thermostatic steam trap

This invention relates to steam traps, that is, devices for allowing the escape of hot condensate and gases from a steam line, and, more particularly, to thermostatic steam traps, that is, steam traps operated in response to the temperature of the fluid in the steam line. The invention also relates to an insert assembly usable in a body member to form said steam trap.

Thermostatic steam traps generally include a valve and a control chamber in which is carried a control fluid responsive to the fluid temperature on the inlet side of the trap to control the opening and closing of the valve. Normally the control fluid is in a liquid state and vaporizes at a temperature somewhat lower than the steam temperature of the fluid on the inlet side of the trap. In the liquid state when the temperature of the fluid on the inlet side of the trap indicates condensate is present, the condensate pressure opens the valve allowing the passage of the condensate. When the temperature of the condensate approaches that of steam, the control fluid vaporizes exerting a pressure closing the valve and preventing the passage of steam.

One type of thermostatic steam trap utilizes a bellows member forming part of the control chamber in which the control fluid is contained. Normally, the bellows member includes a valve member at an end thereof adjacent a valve seat at the discharge passage of the trap. Another type of thermostatic trap includes a diaphragm arrangement in which one face forms part of the control chamber and another face of which cooperates with a valve seat to provide the required valve action. Examples of this latter type of trap are disclosed in United States Patent, No. 4,013,220 and in United States Patent, No. 4,037,784. Specifically, the steam trap according to United States Patent, No. 4,037,784 is designed as defined in the opening portion of Claim 1. The control fluid is placed in the control chamber in liquid state. This means that the various components forming the control chamber are initially welded or otherwise secured together with provision being made for a small inlet opening through which the control fluid is poured in liquid state into the interior of the chamber. Thereafter, the control chamber can be evacuated, but in all cases, the opening must be sealed. Accordingly, the manufacture of thermostatic steam traps is relatively expensive in view of the various manufacturing steps required to form, fill and seal the control chamber.

It is, therefore, an object of this invention to provide a thermostatic steam trap that is relatively economical to manufacture.

The invention provides the solution to this object by the features as they are defined in the characterizing clause of Claim 1. Stated differently, the control fluid may be considered to be in a capsule member formed by a small block of porous material which is saturated with the control fluid.

The advantage offered by the invention resides in the fact that during manufacture of the steam trap the control fluid is inserted into same by means of the block of porous material which is in solid form. This obviates the need for pouring the control fluid in liquid state into the interior of the control chamber.

Specific and advantageous further developments of the main inventive idea, as defined in Claim 1, form the subject matter of subclaims.

For a better understanding of the invention, reference is made to the following description of preferred embodiments thereof taken in conjunction with the figures of the accompanying drawing, in which:

Fig. 1 is a sectional view of one embodiment of a steam trap in accordance with this invention;

Fig. 2 is an enlarged view of the insert assembly used in the steam trap illustrated in Fig. 1;

Fig. 3 is a sectional view of another embodiment of a steam trap in accordance with this invention; and,

Fig. 4 is an enlarged view of the insert assembly used in the steam trap illustrated in Fig. 3.

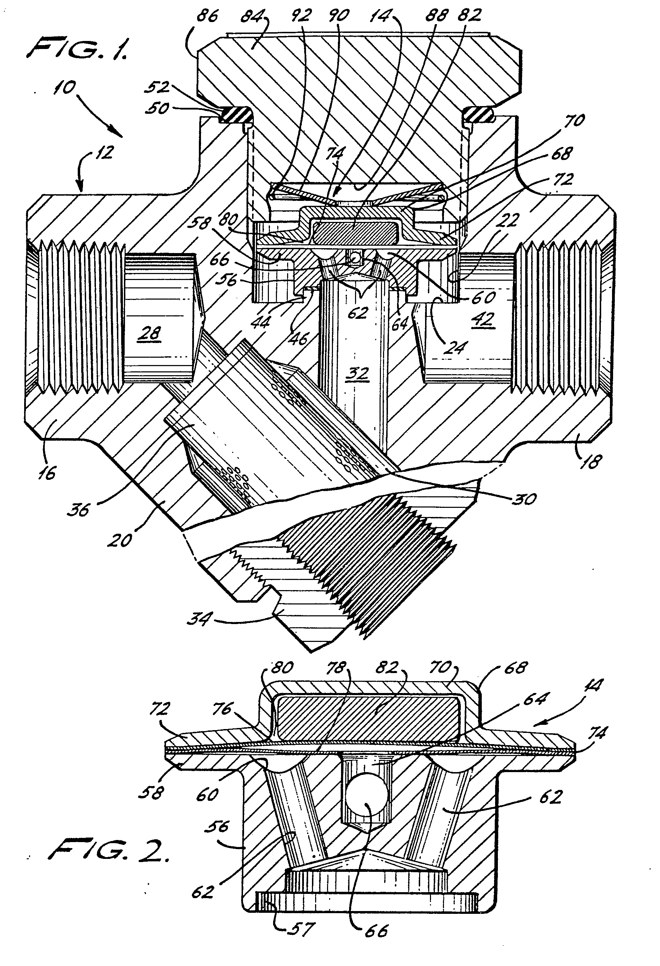

Referring now to Figs. 1 and 2 of the drawing, there is illustrated a thermostatic steam trap 10 usable in a steam system to allow condensate to drain off but to retain steam in the system. The steam trap 10 includes a valve body member 12 and a valve insert assembly 14 for controlling the flow of fluid through the body member. In the embodiment of the invention disclosed here, the valve body member 12 is of the Y type and, accordingly, includes an inlet portion 16, an outlet portion 18, and a leg portion 20 extending at an angle to the inlet and outlet portions. It should be particularly understood, however, that any suitable configuration can be utilized. Intermediate the inlet and outlet portions, the body member is formed with a generally cylindrical recess 22 extending inwardly from an outer face thereof and terminating at an annular end face 24 located internally of the body member. A portion of the cylindrical wall forming the recess 22 is formed with threads for receiving and securing the insert assembly 14 to the body member 12 as will be fully explained hereinafter.

An inlet passage formed in the body member 12 and includes a first passageway 28 formed in the inlet portion 16, a second passageway 30 formed in the leg portion 20 and a third passageway 32 extending upwardly from the second passageway at a generally right angle to the first passageway and which terminates in the end face 24 and which is coaxially related to the recess 22. Accordingly, the inlet passage communicates between an inlet pipe to which the body member 12 is secured and the recess 22. The passageway 30 is formed with a threaded portion adjacent its free end which cooperates with a threaded portion of a cap member 34 which clamps a strainer 36 in the second passageway. The strainer 36 is a perforated cylindrical member arranged so that incoming fluid flows through the interior of the member, through the perforations and then through the passageway 32. As is usual in the art, the cap member 34 can be removed periodically so that the strainer 36 can be removed and cleaned.

Also formed in the body member 12 is an outlet passage which is in the form of a passageway 42 that communicates with the recess 22 through the sidewall thereof and the end face 24. The passageway 42 is suitably adapted to be connected to an outlet pipe connected to the condensate system.

The end face 24 of the recess 22 is formed with an annular rib 44 having a surface which extends about the inlet passageway 32. On the surface of the rib member is seated a sealing ring 46 clamped in place by a bearing surface on the insert assembly 14. The outer surface of the body member is formed with a seat 50 in the form of an annular recess extending around the cylindrical recess 22. A sealing ring 52 is located in the seat 50 and is clamped in place by another bearing surface on a bonnet 84.

The valve insert assembly 14 includes as best seen in Fig. 2, a generally cylindrical insert member 56 formed with a recess 57 at one end that cooperates with the annular rib 44 to clamp the sealing ring 46 in place and is further formed with a radial flange 58 at its other end. Radially inwardly of the radial flange 58, the insert member 56 is formed with an annular recess 60. Inlet passage means is provided in the form of a series of passagways 62 extending from the face of the insert member 56 adjacent recess 57 at an angle to and in communication with the recess 60 whereby the passageway 62 communicate between the recess and the passageway 32 formed in the body member 12. Located centrally of the insert member 56 is a bore 64 and a cross-bore 66 which communicate with the face of the body member inwardly adjacent the flange 58 and recess 60 so that the bore 64 and cross-bore 66 communicate with the discharge passage 42 formed in the body member 12. The surface of the body member 56 surrounding the bore 64 functions as a valve seat as will be explained hereinafter.

Fixed to the insert member 56 is a hat-shaped housing member 68 including a cylindrical recessed portion 70 and a radial flange 72. The flange 72 mates with the flange 58 and the upper housing portion 68 can be secured to the insert member 56 by welding at the outer periphery of the flanges 58 and 72. Sandwiched between the flanges 58 and 72 is a diaphragm means 74. In the preferred embodiment of the invention disclosed herein the diaphragm means 74 includes a flexible metal diaphragm 76 adjacent the housing member 68 and a second flexible metal diaphragm 78 adjacent the insert member 56 as best seen in Fig. 2. Normally, as best seen in Fig. 1, the diaphragms 76 and 78 are in abutting face-to-face relationship. The first diaphragm 76 is a circular sheet metal member and extends across the recessed portion 70 of the housing member 68 so that a closed control chamber 80 is formed. The second diaphragm 78 is an annular metal member overlying the annular recess 60 and is formed with a central opening overlying the bore 64 in the insert member 56. As will be made clear hereinafter the diaphragms 76 and 78 are movable toward and away from the recess 60 and the valve seat surrounding the bore 64 so that they have a first or closed position overlying the recess 60 with the first diaphragm 76 also overlying the valve seat surface and the bore 64 to prevent flow of fluid from the passageways 62 to the bore 64 and a second or open position spaced from the recess 60 to allow flow of fluid from the passageways 62 to the bore 64. Thus, the diaphragms 76 and 78 act as valve members. In addition, the diaphragm 76 can be spaced from the recess 60 while the diaphragm 78 overlies the recess 60 to prevent flow of fluid from the bore 64 to the annular recess 60. Thus, the diaphragm 78 acts as a check valve.

Carried in the control chamber 80 is a pill-shaped block of porous material 82 such as sintered metal or ceramic. The material 82 is saturated with a generally conventional control fluid such as a water-alcohol mixture so that the control fluid has a boiling point somewhat lower than the boiling point of the live steam in the steam system with which the trap 10 is associated. Fluid on the inlet side of the trap 10 collects in the annular recess 60 and is, thus, in heat exchange relationship with the control chamber 80. When the fluid is condensate, the control fluid, of which there is a relatively small volume, is in a liquid state so that the pressure of the condensate moves and retains the diaphragms 76 and 78 in their open position allowing the escape of the condensate. When the temperature of the condensate approaches that of the steam in the associated system, the control fluid vaporized and the vapor exerts a relatively high pressure on the face of the diaphragm 76 forming part of the control chamber, causing the diaphragms 76 and 78 to move to their closed position.

As pointed out previously, the insert assembly 14 seats in the recess 22 with the recessed portion 57 arranged in overlying relationship with the rib 44. The valve insert assembly 14 is retained in assembled relationship with the body member 12 by bonnet 84 including a cylindrical portion formed with threads that cooperate with the threads formed in the recess 22 and which further includes a flange 86 at one end providing a bearing surface that clamps the sealing ring 52 in the recess 50. The flange 86 is also formed with a wrenching configuration around its periphery to accommodate a tool used to assemble or disassemble the insert assembly 14 with the body member 12. A recessed portion 88 is formed in the bonnet 84 adjacent the other end of the cylindrical portion and forms a seat for retaining spring means in the form of a dish-shaped Belleville washer 90. The central portion of the washer 90 bears on the top surface of the upper housing portion 68 and its outer periphery seats tightly against the surface of the recess 88. Accordingly, the spring washer 90 provides a force clamping the insert assembly 14 downwardly against the seal 46 and rib member 44. In order to retain the washer 90 in assembled relationship, the inner cylindrical surface of the recess 88 is formed with a groove in which is located a retaining ring 92 which holds the washer in assembled relationship when the bonnet 84 is removed.

In operation, the steam trap is located in a steam system such that fluid in the system passes through the inlet passageways 28, 30, 32 and 62 to the annular recess 60 in the insert member 58. If this fluid is condensate and gases so that its temperature is sufficiently low to keep the control fluid in the liquid state, the pressure of this condensate exerted against the adjacent surface of the diaphragm means 74 is sufficient to lift the diaphragms 76 and 78 off of the recess 60 and valve seat around the passage 64 allowing the fluid to flow through the bore 64 and cross-bore 66 to the discharge passageway 42.

When the temperature of the incoming fluid increases and approaches that of steam, the temperature of the control fluid, having a lower boiling point, will rise to its boiling point causing the control fluid to vaporize and exert significant pressure in the control chamber 80 acting against the opposite surface of the diaphragm means 74 causing the diaphragms 76 and 78 to move to the closed position preventing the escape of live steam. The opening and closing temperature can be controlled by the proper selection of the control fluid.

As noted previously, the diaphragm means 74 is arranged so that diaphragm 78 functions as a check valve in the event of a back surge of pressure from the discharge side of the trap 10. Upon the occurrence of a back surge of pressure, the pressure is exerted directly against the exposed surface of the diaphragm 76 adjacent the bore 64 causing that diaphragm to lift off of the valve seat and away from the recess 60 as shown in Fig. 2. This pressure cannot act on the lower surface of the diaphragm 78 so that the diaphragm is actually pushed downwardly over the recess 60 and inlet passages 62. Accordingly, fluid cannot flow backward into the inlet valve side of the valve body member.

From the preceding, various of the advantages of this invention should be understood. The insert assembly 14 is relatively economical and easily replaceable. In manufacture, the sintered metal pill 82 with the control fluid can be placed inside the recessed portion 70 of the housing 68, then this assembly can be mated with the diaphragm means 74 and insert member 56. The flanges 58, 72 and the outer periphery of the diaphragms 76 and 78 can be welded to secure the insert assembly 14 together. During replacement, the bonnet 84 can be loosened and removed and because of the retaining ring 92, the washer 90 is removed therewith. The insert assembly can be easily replaced and the bonnet 84 and spring washer 90 easily reassembled with the body member 12. In the event the diaphragm 76 fractures, the control fluid, of course, leaks through the passageway 32 and the incoming fluid acts on the diaphragm 78. Thus forces the diaphragm 78 is retained in the open position and forces the diaphragm 76 to also move to the open position allowing the discharge of fluid.

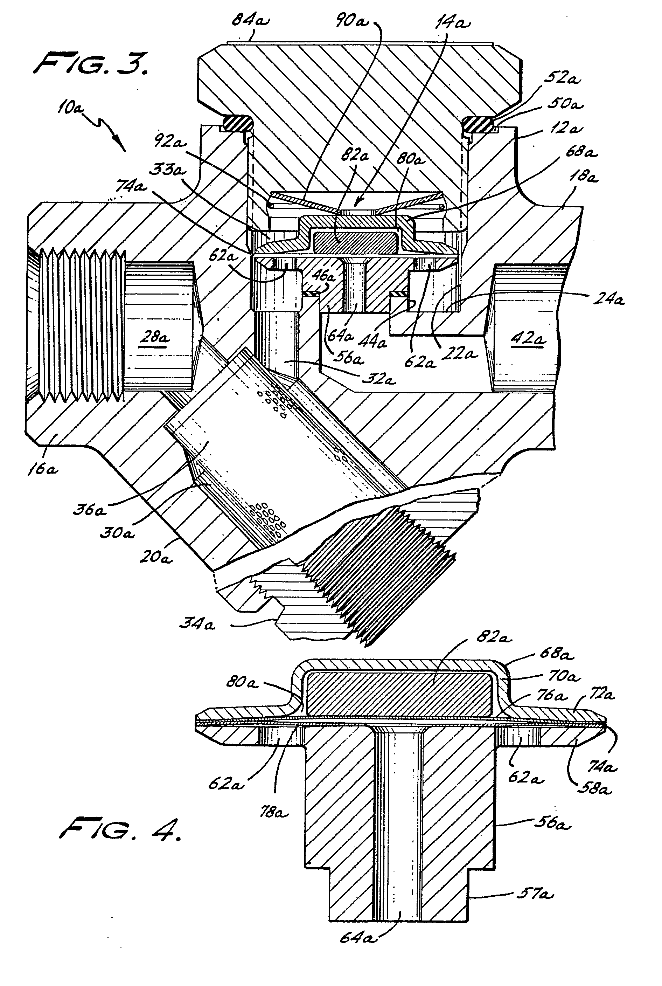

Referring now to Figs. 3 and 4 of the drawing, there is disclosed another embodiment of a thermostatic steam trap 10a in accordance with this invention. The steam trap 10a is generally similar to steam trap 10 and like parts will be referred to with like reference numerals including the suffix a. Thus, the steam trap 10a includes a body member 12a and an insert assembly 14a. The body member 12a includes an inlet portion 16a, an outlet portion 18a, a leg portion 20a and a generally cylindrical recess 22a terminating in an annular end face 24a. There is also provided inlet passage means including inlet passageways 28a, 30a and 32a. Passageway 32a is formed off-center with respect to the recess 22a and is located adjacent the cylindrical wall of the recess 22a so that fluid can flow into a chamber 33a formed by the recess and the bonnet 84a and in which the insert assembly 14a is received. The portion 18a includes a discharge passageway 42a that terminates in the center of the surface 24a of the recess 22a. An annular rib member 44a and sealing ring 46a are also provided.

In a manner similar to the embodiment of Figs. 1 and 2, the body member 12a includes a strainer 36a retained in place by a cap member 34a. Also in a manner similar to the embodiment of Figs. 1 and 2 there is provided a seat 50a and a sealing ring 52a retained in place by the flange 86a of the bonnet member 84a. Associated with the bonnet member 84a is a retaining ring 92a and spring washer 90a for retaining the insert assembly 14a in place.

Referring specifically to Fig. 4 of the drawing, the insert assembly 14a can be clearly seen and includes a generally cylindrical insert member 56a formed with a reduced diameter portion 57a at one end that is received in the discharge opening 42a at the end face 24a. Thus, a bearing surface is provided that retains the sealing ring 46a in place. The insert member 56a is formed at its other end with a radially extending flange 58a formed with a plurality of inlet passages 62a extending therethrough such that the passageways communicate with the chamber 33a and, thus, the passageway 32a as best seen in Fig. 3. Extending centrally through the insert member 56a is the discharge passageway 64a that communicates with the discharge passageway 42a permitting the discharge of fluid from the inlet passageways 62a across a valve surface formed at the upper end of the discharge passageway 64a through that passageway to the passageway 42a.

Completing the insert assembly 14a there is a hat-shaped housing member 68a having a central recessed portion 70a and a radial flange 72a that is in bearing relationship with the flange 58a on the insert member 56a. Diaphragm means 74a is clamped between the flanges 58a and 72a so that a control chamber 80a is provided between the recessed portion 70a and one side of the diaphragm means 74a. Inside the control chamber 80a is a pill-shaped block of porous material 82a, metal or ceramic, which is saturated with a control fluid in a manner similar to the pill 80 described in Figs. 1 and 2. The diaphragm means 74a includes a first flexible metal diaphragm 76a and a second flexible, annular diaphragm 78a, both diaphragms being the same as diaphragms 76 and 78.

Operation of the steam trap 10a is the same as that of steam trap 10. That is, the control fluid in control chamber 80a is sensitive to the temperature of fluid on the inlet side of the trap being in heat exchange relationship with that fluid located in passageways 62a and in chamber 33a. If the temperature indicates the fluid is in a liquid state, diaphragm means 74a is open allowing the discharge of the condensate and gases. On the other hand, if the temperature vaporizes the control fluid, the pressure in the control chamber 80a closes the diaphragm means 74a and retains it in its closed position until the temperature drops allowing the vapor to condense. The diaphragm 78a similarly operates as a check valve if there is a backsurge of pressure from the discharge side of the trap.

The embodiment illustrated in Figs. 3 and 4 has the same advantages explained with respect to the embodiment of Figs. 1 and 2. In addition, the fluid on the inlet side of the trap is located in the chamber 33a and surrounds the upper housing member 68a as well as the diaphragm areas over the inlet passageways 62a so that a larger heat transfer path from the inlet fluid to the control fluid is provided.

While in the foregoing there has been described several preferred embodiments of the invention, it should be understood that various changes and modifications can be made within the spirit and scope of the invention as recited in the appended claims.

## Claims

1. A thermostatic steam trap (10) comprising a body member (12) and an insert assembly (14), said body member having an inlet passage (28) and a discharge passage (42), said insert assembly having an inlet passageway (62) communicating with said inlet passage (28) and a discharge passageway (64) communicating with said discharge passage (42), said insert assembly (14) including a control chamber (80) and generally flexible diaphragm means (74) one face of said diaphragm means (74) forming part of said control chamber (80) and another face thereof operating to open or close said passageways (62, 64), a control fluid being contained in said control chamber (80) and having a boiling point slightly lower than steam, said control chamber (80) being in heat exchange relationship with fluid in the inlet side of said body member (12) whereby said control fluid vaporizes and moves said diaphragm means (74) to its closed position when the temperature of the fluid in the inlet side approximates that of live steam and condenses at lower temperatures allowing fluid in the inlet side to move said diaphragm means (74) to its open position, characterized in that a block (82) of porous solid material saturated with said control fluid is located in said control chamber (80).

2. A thermostatic steam trap in accordance with Claim 1 characterized in that said inlet passageway (62) communicates with a recess (60) adjacent said diaphragm means (74) whereby fluid in the inlet side of said body member (12) contacts said diaphragm means.

3. A thermostatic steam trap in accordance with Claim 1 characterized in that said inlet passage (28a) communicates with a chamber (33a) in said body member (12a), said insert assembly (14a) being located in said chamber (33a) whereby fluid in the inlet side of said body member (12a) contacts said insert assembly (14a).

4. A thermostatic steam trap in accordance with Claim 1 characterized in that said block of porous material (82) is metal or ceramic and said control fluid is a liquid at normal temperatures.

5. A thermostatic steam trap in accordance with Claim 1 characterized by a recess (22) in said body member (12) in which said insert assembly (14) is received, said recess being closed by a bonnet member (84), and spring means (90) between said bonnet member (84) and said insert assembly (14) for retaining said insert assembly in position.

6. A thermostatic steam trap in accordance with Claim 1 characterized in that said bonnet member (84) includes retaining ring means (92) for retaining said spring means (90) with said bonnet member (84) when said bonnet member (84) is removed from said body member (12).

7. A thermostatic steam trap in accordance with Claim 1 wherein said diaphragm means (74) includes a first diaphragm (76) adjacent said control chamber (80) and a second diaphragm (78) adjacent said passagways (62, 66), said first and second diaphragms being in abutting relationship.

8. An insert assembly (14) usable in a body member (12) to form a thermostatic steam trap (10), said insert assembly (14) comprising a generally cylindrical insert member (56) formed with a radial flange (58) at one end and including inlet passage means (62) and discharge passage means (64, 66), a hat-shaped housing member (68) formed with a central recessed portion (70) and a radial flange (72), generally flexible diaphragm means (74) between said insert member (56) and said housing member (68); said insert member, housing member and diaphragm means being secured at the outer periphery of said radial flanges (58, 72), said diaphragm means extending across said central recessed portion of said housing member forming a control chamber (80), characterized in that a block (82) of porous material saturated with said control fluid is located in said control chamber (80).

9. An insert assembly in accordance with Claim 8 characterized in that said inlet passage means (62) comprises a plurality of passageways extending from one end face of said insert member (56) to the other end face, said one end face being formed with an annular recess (60) with which said passageways communicate, said discharge passage means including a bore (64) centrally formed in said one end face inwardly of said annular recess (60) and crossbores (66) extending from said bore (64) to the cylindrical wall of said insert member.

10. An insert assembly in accordance with Claim 9 characterized in that said other end face of said insert member (56) is formed with a recess (57).

11. An insert assembly in accordance with Claim 8 characterized in that said inlet passage means comprises a plurality of passageways (62a) formed in said radial flange (58a) on said insert member (56a) and wherein said discharge passage means comprises a passage (64a) centrally formed in said insert member and extending from one end face to the other.

12. An insert assembly in accordance with Claim 11 characterized in that said insert member (56a), at its other end, is formed with a reduced diameter portion (57a).

13. An insert assembly in accordance with Claim 8 characterized in that said diaphragm means (74a) includes a first diaphragm (76a) adjacent said housing member (68a) and extending across said recessed portion (70a) thereof to form said control chamber (80a) and further includes a second diaphragm (78a) adjacent said insert member (56a) and being formed with a central opening generally adjacent said discharge passage means (64a).

14. An insert assembly in accordance with Claim 13 characterized in that said first and second diaphragms (76a, 78a) are in abutting relationship.

**Revendications**

1. Purgeur d'eau de condensation thermostatique (10) comprenant un corps (12) et une capsule (14), le corps comportant un passage d'entrée ou d'admission (28) et un passage de sortie ou d'évacuation (42), la capsule comportant un passage d'admission (62) communiquant avec le passage d'admission (28) et un passage d'évacuation (64) communiquant avec le passage d'évacuation (42), la capsule (14) comprenant une chambre de commande (80) et un diaphragme dans l'ensemble flexible (74), une face du diaphragme (74) faisant partie de la chambre de commande et une autre face de ce diaphragme intervenant pour ouvrir ou fermer les passages (62, 64), un fluide de commande étant contenu dans la chambre de commande (80) et ayant un point d'ébullition légèrement inférieur à celui de la vapeur, la chambre de commande (80) étant en relation d'échange thermique avec le fluide présent dans le côté d'entrée du corps (12), de sorte que le fluide de commande se vaporise et déplace le diaphragme (74) vers sa position de fermeture lorsque la température du fluide dans le côté d'entrée est proche de celle de la vapeur vive et qu'il se condense à des températures moins élevées, ce qui permet au fluide présent dans le côté d'entrée de déplacer le diaphragme (74) vers sa position d'ouverture, caractérisé en ce qu'un bloc (82) de matière solide poreuse saturée du fluide de commande est placé dans la chambre de commande (80).

2. Purgeur d'eau de condensation thermostatique suivant la revendication 1, caractérisé en ce que le passage d'entrée (62) communique avec une gorge (60) près du diaphragme (74), de sorte que le fluide présent dans le côte d'entrée du corps (12) vient en contact avec le diaphragme.

3. Purgeur d'eau de condensation thermostatique suivant la revendication 1, caractérisé en ce que le passage d'entrée (28a) communique avec une chambre (33a) dans le corps (12a), la capsule (14a) étant placée dans la chambre (33a), de sorte que le fluide présent dans le côté d'entrée du corps (12a) vient en contact avec la capsule (14a).

4. Purgeur d'eau de condensation thermostatique suivant la revendication 1, caractérisé en ce que le bloc de matière poreuse (82) est en métal ou en matière céramique et le fluide de commande est liquide aux températures normales.

5. Purgeur d'eau de condensation thermostatique suivant la revendication 1, caractérisé en ce qu'un logement (22) est prévu dans le corps (12) et reçoit la capsule (14), ce logement étant fermé par un chapeau (84), et un ressort (90) est prévu entre le chapeau (84) et la capsule (14) pour retenir la capsule en place.

6. Purgeur d'eau de condensation thermostatique suivant la revendication 1, caractérisé en ce que le chapeau comprend un anneau de retenue (92) destiné à retenir le ressort (90) fixé au chapeau (84) lorsque le chapeau (84) est enlevé du corps (12).

7. Purgeur d'eau de condensation thermostatique suivant la revendication 1, caractérisé en ce que le diaphragme (74) comprend une première membrane (76) adjacent à la chambre de commande (80) et une deuxième membrane (78) adjacente aux passages (62, 66), la première et la deuxième membrane étant juxtaposées en contact.

8. Capsule (14) pouvant être utilisée dans un corps (12) pour former un purgeur d'eau de condensation thermostatique (10), qui comprend un élément dans l'ensemble cylindrique (56) pourvu d'une bride radiale (58) à une extrémité et comprenant un passage d'entrée ou d'admission (62) et un passage de sortie ou d'évacuation (64, 66), une coiffe en forme de chapeau (68) présentant un renfoncement central (70) et une bride radiale (72), un diaphragme dans l'ensemble flexible (74) entre l'élément cylindrique (56) et la coiffe (68), l'élément cylindrique, la coiffe et le diaphragme étant réunis au niveau de la périphérie externe des brides radiales (58, 72), le diaphragme s'étendant en travers du renfoncement central de la coiffe et formant une chambre de commande (80), caractérisée en ce qu'un block (82) de matière poreuse saturée du fluide de commande est placé dans la chambre de commande (80).

9. Capsule suivant la revendication 8, caractérisée en ce que le passage d'admission (62) comprend plusieurs lumières allant d'une face d'extrémité de l'élément cylindrique (56) à son autre face d'extrémité, la première face d'extrémité présentant une gorge annulaire (60) avec laquelle les lumières communiquent, le passage d'évacuation comprenant une forure (64) centrée dans une face d'extrémité intérieurement par rapport à la gorge annulaire (60) et une forure transversale (66) allant de la forure (64) à la paroi cylindrique de l'élément cylindrique.

10. Capsule suivant la revendication 9, caractérisée en ce que l'autre face d'extrémité de l'élément cylindrique (56) présente un évidement (57).

11. Capsule suivant la revendication 8, caractérisée en ce que le passage d'admission comprend plusieurs lumières (62a) formées dans la bride radiale (58a) sur l'élément cylindrique (56a) et le passage d'évacuation comprend une forure (64a) centrée dans l'élément cylindrique et allant d'une face d'extrémité à l'autre de celui-ci.

12. Capsule suivant la revendication 11, caractérisée en ce que l'élément cylindrique (56a) présente, à son autre extrémité, une partie de plus petit diamètre (57a).

13. Capsule suivant la revendication 8, caractérisée en ce que le diaphragme (74a) comprend une première membrane (76a) adjacente à la coiffe (68a) et s'étendant en travers de son renfoncement pour former la chambre de commande (80) et une deuxième membrane (78a) adjacente à l'élément cylindrique (56a) et percée d'une ouverture centrale dans l'ensemble adjacente à la forure d'évacuation (64a).

14. Capsule suivant la revendication 13, caractérisée en ce que la première et la deuxième membrane (76a, 78a) sont juxtaposées en contact.

**Patentansprüche**

1. Eine thermostatischer Dampfwasserableiter (10) mit einem Körperglied (12) und einem Gehäuseeinsatz (14), wobei das Körperglied einem Einlaßkanal (28) und einen Auslaßkanal (42) und der Gehäuseeinsatz einen mit dem Einlaßkanal (28) in Verbindung stehenden Einlaßdurchgang (62) und einen mit dem Auslaßkanal (42) in Verbindung stehenden Auslaßdurchgang (64) aufweist, der Gehäuseeinsatz (14) eine Steuerkammer (80) und eine allgemein flexible Membraneinrichtung (74) enthält, deren eine Seite einen Teil der Steuerkammer (80) bildet und deren andere Seite zum Öffnen oder Schließen der Durchgänge (62, 64) in Tätigkeit tritt, wobei weiter ein Steuermedium in der Steuerkammer (80) enthalten ist und einen Siedepunkt etwas unter dem von Dampf aufweist, die Steuerkammer (80) sich mit dem Medium auf der Einlaßseite des Körpergliedes (12) in Wärmeustauschbeziehung befindet, so daß das Steuermedium, wenn sich seine Temperatur auf der Einlaßseite der von Frischdampf annähert, verdampft und die Membraneinrichtung (74) in ihre geschlossene Stellung bewegt, und bei niedrigeren Temperaturen kondensiert, so daß das Medium auf der Einlaßseite die Membraneinrichtung (74) in ihre geöffnete Stellung verschiebt, dadurch gekennzeichnet, daß ein mit dem Steuermedium gesättigter Block (82) aus porösem festen Material in der Steuerkammer (80) angeordnet ist.

2. Ein thermostatischer Dampfwasserableiter nach Anspruch 1, dadurch gekennzeichnet, daß der Einlaßdurchgang (62) mit einer Ausnehmung (60) an der Membraneinrichtung (74) in Verbindung steht, so daß das Medium auf der Einlaßseite des Körpergliedes (12) mit der Membraneinrichtung in Berührung steht.

3. Ein thermostatischer Dampfwasserableiter nach Anspruch 1, dadurch gekennzeichnet, daß der Einlaßkanal (28a) mit einer Kammer (33a) in dem Körperglied (12a) in Verbindung steht und der Gehäuseeinsatz (14a) in der Kammer (33a) angeordnet ist, so daß das Medium auf der Einlaßseite des Körpergliedes (12a) mit dem Gehäuseeinsatz (14a) in Verbindung steht.

4. Ein thermostatischer Dampfwasserableiter nach Anspruch 1, dadurch gekennzeichnet, daß der Block aus porösem Material (82) Metall oder Keramik und das Steuermedium bei Normaltemperaturen eine Flüssigkeit ist.

5. Ein thermostatischer Dampfwasserableiter nach Anspruch 1, gekennzeichnet durch eine Ausnehmung (22) in dem Körperglied (12), in der der Gehäuseeinsatz (14) aufgenommen ist, die Ausnehmung durch ein Kappenglied (84) verschlossen ist, und eine Federeinrichtung (90) zwischen dem Kappenglied (84) und dem Gehäusseinsatz (14) zum Halten des Gehäuseeinsatzes in seiner Lage.

6. Ein thermostatischer Dampfwasserableiter nach Anspruch 1, dadurch gekennzeichnet, daß das Kappenglied (84) eine Halteringeinrichtung (92) zum Zurückhalten der Federeinrichtung (90) mit dem Kappenglied (84) enthält, wenn dieses vom Körperglied (12) abgenommen wird.

7. Ein thermostatischer Dampfwasserableiter nach Anspruch 1, dadurch gekennzeichnet, daß die Membraneinrichtung (74) eine erste Membrane (76) an der Steuerkammer (80) und eine zweite Membrane (78) und den Durchgängen (62, 66) enthält und die erste und die zweite Membrane aneinander anliegen.

8. Ein Gehäuseeinsatz (14) zur Verwendung in einem Körperglied (12) zum Ausbilden eines thermostatischen Dampfwasserableiters (10), wobei der Gehäuseeinsatz (14) ein allgemein zylinderförmiges Einsatzglied (26) aufweist, das an einem Ende mit einem radialen Flansch (58) ausgebildet ist und eine Einlaßkanaleinrichtung (62) und eine Auslaßkanaleinrichtung (64, 66) enthält, ein hutförmiges Gehäuseglied (68) mit einem zentrischen ausgenommenen Abschnitt (70) und einem radialen Flansch (72) ausgebildet ist, eine allgemein flexible Membraneinrichtung (74) zwischen dem Einsatzglied (56) und dem Gehäuseglied (68) angeordnet ist; wobei das Einsatzglied, das Gehäuseglied und die Membraneinrichtung am Außenumfang der radialen Flansche (58, 72) befestigt sind und die Membraneinrichtung unter Bildung einer Steuerkammer (80) über dem zentrischen ausgenommenen Abschnitt des Gehäusegliedes verläuft, dadurch gekennzeichnet, daß ein Block (82) aus mit dem Steuermedium gesättigtem porpösen Material in der Steuerkammer (80) angeordnet ist.

9. Ein Gehäuseeinsatz nach Anspruch 8, dadurch gekennzeichnet, daß die Einlaßkanaleinrichtung (62) mehrere von einer Stirnseite des Einsatzgliedes (56) zu dessen anderer Stirnseite verlaufende Durchgänge aufweist, die eine Stirnseite mit einer ringförmigen Ausnehmung (60) ausgebildet ist, mit der die Durchgänge in Verbindung stehen, die Auslaßkanaleinrichtung eine zentrisch in der einen Stirnseite einwärts von der ringförmigen Ausnehmung (60) ausgebildete Bohrung (64) enthält und Querbohrungen (66) von der Bohrung (64) zu der zylinderförmigen Wand des Einsatzgliedes verlaufen.

10. Ein Gehäuseeinsatz nach Anspruch 9, dadurch gekennzeichnet, daß die andere Stirnseite des Einsatzgliedes (56) mit einer Ausnehmung (57) ausgebildet ist.

11. Ein Gehäuseeinsatz nach Anspruch 8, dadurch gekennzeichnet, daß die Einlaßkanaleinrichtung mehrere in dem radialen Flansch (58a) auf dem Einsatzglied (56a) ausgebildete Durchgänge (62a) aufweist und wobei die Auslaßkanaleinrichtung einen zentrisch in dem Einsatzglied ausgebildeten und von der einen Stirnseite zur anderen verlaufenden Kanal (64a) aufweist.

12. Ein Gehäuseeinsatz nach Anspruch 11, dadurch gekennzeichnet, daß das Einsatzglied (56a) an seinem anderen Ende mit einem Abschnitt (57a) mit verringertem Durchmesser ausgebildet ist.

13. Ein Gehäuseeinsatz nach Anspruch 8, dadurch gekennzeichnet, daß die Membraneinrichtung (74a) eine erste Membrane (76a) am Gehäuseglied (68a) aufweist und unter Bildung der Steue-r-kammer (80a) über den Ausgenommenen Abschnitt (70a) des Gehäusegliedes verläuft und weiter eine zweite Membrane (78a) am Einsatzglied (56a) enthält und allgemein an der Auslaßkanaleinrichtung (64a) mit einer zentrischen Öffnung ausgebildet ist.

14. Ein Gehäuseeinsatz nach Anspruch 13, dadurch gekennzeichnet, daß die erste und die zweite Membrane (76a, 78a) aneinander anliegen.

FIG. 1.

FIG. 2.

0012267

FIG. 3.

FIG. 4.

2